Europäisches Patentamt

European Patent Office

Office européen des brevets

(11) Veröffentlichungsnummer: **0 520 251 A2**

## (12) EUROPÄISCHE PATENTANMELDUNG

(21) Anmeldenummer: **92109867.9**

(51) Int. Cl.5: **G11B 7/007**, G11B 7/013

(22) Anmeldetag: **11.06.92**

(30) Priorität: **28.06.91 DE 4121505**

(43) Veröffentlichungstag der Anmeldung:
**30.12.92 Patentblatt 92/53**

(84) Benannte Vertragsstaaten:
**AT BE DE ES FR GB IT NL**

(71) Anmelder: **SONOPRESS PRODUKTIONSGESELLSCHAFT FÜR TON- UND INFORMATIONSTRÄGER mbH
Carl-Bertelsmann-Strasse 161, Postfach 4444
W-4830 Gütersloh 100(DE)**

(72) Erfinder: **Katern, August
Schützenstrasse 19
W-4503 Dissen(DE)**

(72) Erfinder: **Hülskötter, Hans-Peter
Kolpingstrasse 14
W-4412 Ostbevern(DE)**
Erfinder: **Hofmann, Frank
Westerwieherstrasse 225
W-4835 Rietberg(DE)**
Erfinder: **Kirsten, Detlev
Gneisenaustrasse 68
W-4830 Gütersloh(DE)**
Erfinder: **Rudolph, Wolfgang
Fontanestrasse 13
W-4830 Gütersloh(DE)**

(74) Vertreter: **Prietsch, Reiner, Dipl.-Ing.
Patentanwalt Schäufeleinstrasse 7
W-8000 München 21(DE)**

(54) **Plattenförmiger Speicher für binäre Informationen.**

(57) Ein plattenförmiger Speicher des CD-Typs kann mit grösseren Fertigungstoleranzen hergestellt werden, wenn die von dem fokussierten Leselichtbündel abgetastete Spur eine durchgehende Rille (3) mit folgenden Merkmalen umfaßt

- die Breite der Rille (3) ist gleich oder kleiner als die Hälfte der Spurbreite;
- in der Rille (3) folgen erste Bereiche(3a) größerer Tiefe (t1) und zweite Bereiche (3b) geringerer Tiefe (t2) mit stufenförmigen Übergängen aufeinander;
- die Längen der ersten Bereiche und der zweiten Bereiche verkörpern die gespeicherten Binärwerte;
- die Tiefe (t1) der ersten Bereiche (3a) beträgt 1/4 der Wellenlänge des Leselichts;
- die Tiefe (t2) der Zweiten Bereiche (3b) beträgt etwa 1/16 der Wellenlänge des Leselichts.

Fig.5

EP 0 520 251 A2

Die Erfindung betrifft einen plattenförmigen Speicher für optisch auslesbare, binäre Informationen.

Eines der bekanntesten optischen Speichermedien dieser Gattung ist die Compact Disc, deren wesentliche Eigenschaften durch die Norm IEC 908 und durch die Spezifikation "Compact Disc Digital Audio System Description", Juni 1989, Herausgeber Sony Corp. und N.V. Philips, festgelegt sind. Die Compact Disc läßt sich als ein plattenförmiger Speicher für optisch auslesbare, binäre Informationen mit folgenden Merkmalen beschreiben:

Die Informationen sind seriell in Form einer spiraligen Spur auf einer glatten Bezugsfläche aufgezeichnet und im Reflexionsmodus mittels eines fokussierten Lichtbündels auslesbar. Der Fokusdurchmesser des Lichtbündels ist in der Ebene der glatten Bezugsfläche gleich der Spurbreite von etwa 1 $\mu$m. Innerhalb der Spur folgen trogartige Vertiefungen, die sogenannten pits, aufeinander, die in Spurrichtung und in radialer Richtung durch Bereiche der glatten Bezugsfläche voneinander getrennt sind. Die Breite der pits beträgt weniger als die Hälfte der Spurbreite. Die Längen und die gegenseitigen Abstände der Pits verkörpern die gespeicherten Binärwerte, uzw. in der Weise, daß, in Spurrichtung gesehen, jeder Übergang zwischen einem pit und der Bezugsfläche bzw. zwischen der Bezugsfläche und einem pit als logische Eins, die übrigen Bereiche sowohl der pits als auch der Bezugsfläche jedoch als logische Null detektiert werden. Durch das angewendete Kodierverfahren, das sog. EMF-Verfahren vgl. DE-PS 31 25 529, wird dabei sichergestellt, daß die detektierte Binärfolge im wesentlichen gleichwertfrei ist, die Länge der pits im Mittel also genauso groß ist wie die Länge der die pits trennenden Bereiche der glatten Bezugsfläche. Das Detektieren der Übergänge setzt voraus, daß die pits als solche detektierbar, also von der glatten Bezugsfläche unterscheidbar sind. Hierzu bedient man sich des aus der DE-PS 22 08 379 bekannten Prinzips der destruktiven Interferenz.

Diese hat bei einer gleichmäßig reflektierenden Plattenoberfläche ihr Optimum, wenn einerseits die Tiefe der pits genau einem Viertel der Wellenlänge des Leselichtbündels entspricht, andererseits die eine Hälfte des auffallenden Lichts an den das betreffende pit umgebenden Bereichen der glatten Bezugsfläche, die andere Hälfte an dem Boden des pits reflektiert wird. Die Aufeinanderfolge von pits und diese trennenden Bereichen der Bezugsfläche, die sogenannten lands, würde dann die maximale Amplitudenmodulation des reflektierten Lichtbündels liefern.

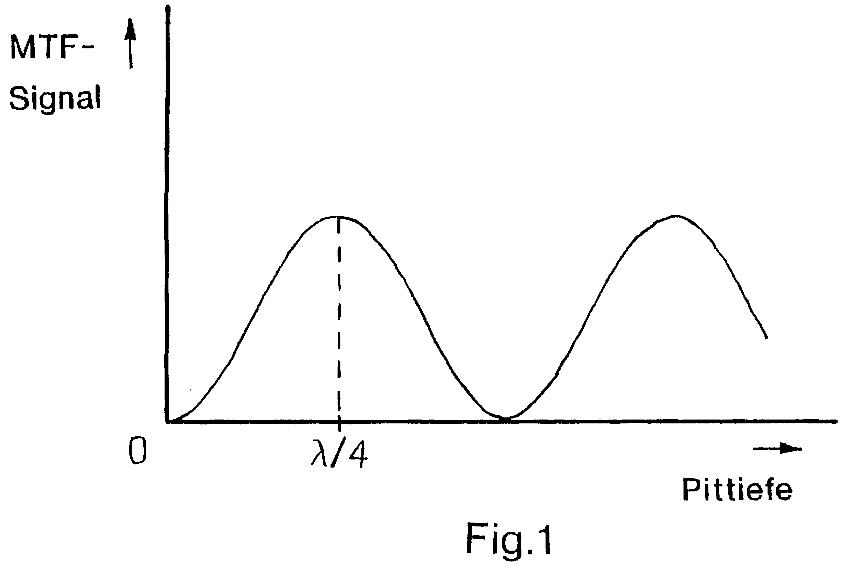

Die Abhängigkeit des dieser Amplitudenmodulation entsprechenden sogenannten MTF-Signals von der auf die Wellenlänge des Leselichtbündels normierten Pittiefe ist in Fig. 1 dargestellt.

Unerläßliche Voraussetzung zum berührungslosen Auslesen eines optischen Speichermediums ist allerdings auch die Erzeugung eines Spurfolgesignals aus dem reflektierten Teil des Leselichtbündels. Das häufig als PP-Signal bezeichnete Spurfolgesignal ist jedoch bei einer Pittiefe von $\lambda/4 = 0$, durchläuft aber bei einer Pittiefe von $\lambda/8$ ein Maximum.

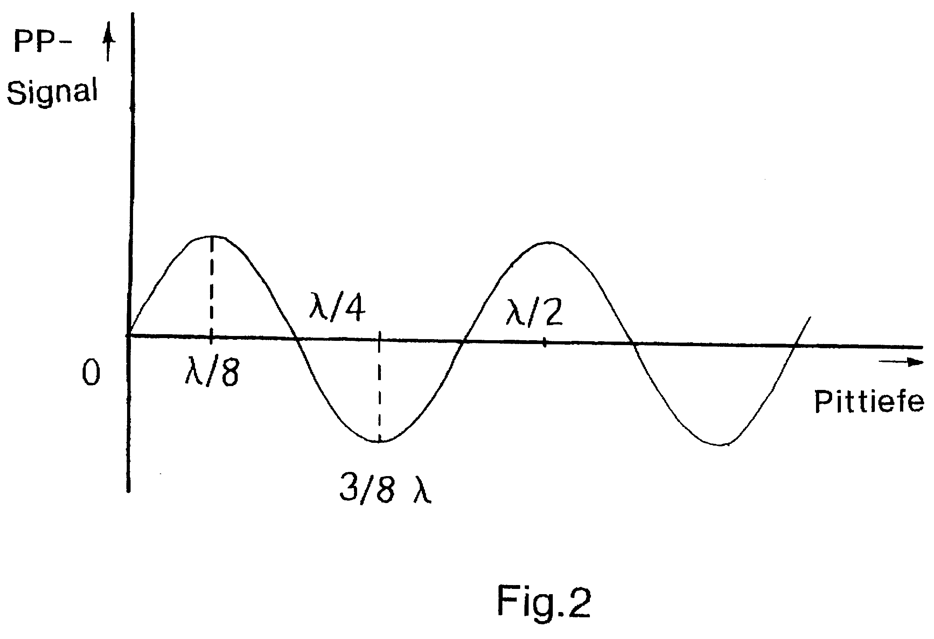

Diese Abhängigkeit ist im einzelnen in Figur 2 dargestellt.

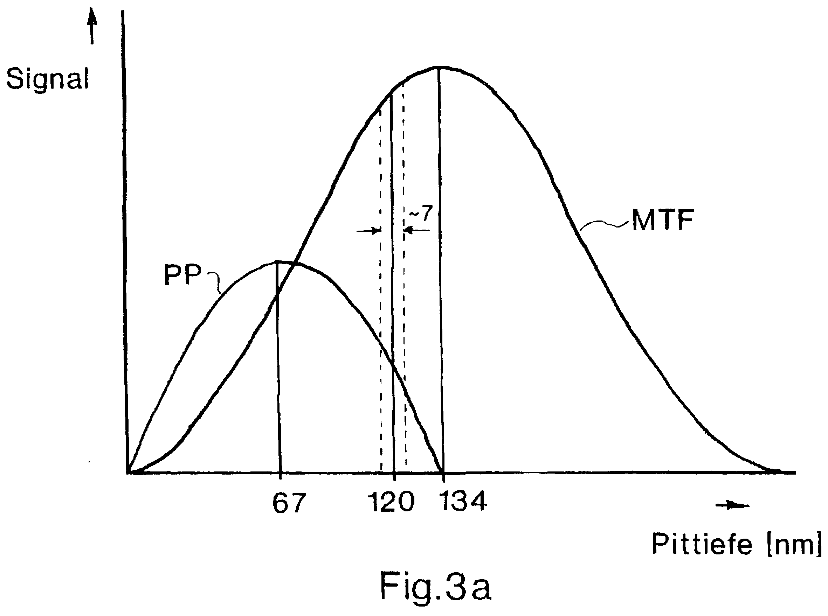

Weder bei der Compact Disc noch bei irgendeinem anderen, nach dem gleichen Ausleseprinzip arbeitenden optischen Speichermedium kann daher von der für die Rückgewinnung des Informationssignals optimalen Pittiefe von $\lambda/4$ Gebrauch gemacht werden. Vielmehr beträgt die Pittiefe etwa 0,225 $\lambda$. Bei diesem Wert wird bei einer noch tolerierbaren Verringerung des MTF-Signals ein ausreichend hoher Wert des PP-Signals erhalten. Bei einer Compact Disc aus transparentem Polycarbonat mit einem Brechungsindex von n = 1,46, die bekanntlich durch das transparente Polycarbonat hindurch ausgelesen wird, sowie einer heute üblichen Wellenlänge von 780 nm des Laserlichts, also einer Wellenlänge von 534 nm in dem Polycarbonat, würde man somit ein maximales MTF-Signal bei einer Pittiefe von 134 nm,ein maximales PP-Signal bei einer Pittiefe von 67nm erhalten. Tatsächlich gearbeitet wird mit einer Tiefe von 0.225 $\lambda$ = 120 nm. Wie aus Figur 3a ersichtlich, muß dieser Wert sehr genau, nämlich auf etwa ± 3,5 nm eingehalten werden, da Abweichungen nach oben zu einem raschen Abfall des PP-Signals und mithin zu Spurfolgeproblemen, Abweichungen nach unten hingegen zu einem ähnlich raschen Abfall des MTF-Signals,mithin zu einer Zunahme fehlerhaft gelesener Daten führen.

Dieser im submikroskopischen Bereich liegenden, engen Toleranz der zulässigen Pittiefe muß bei dem bekannten, vielstufigen Produktionsprozeß einer Compact Disc (und damit vergleichbarer optischer Speichermedien) an vielen Stellen Rechnung getragen werden. Insbesondere müssen bei der Herstellung des Masters die Dicke des Photoresists, d.h. der photoempfindlichen Beschichtung des Glasplatte, die mittels eines Lasers entsprechend der Folge der pits und lands belichtet wird, sehr genau eingestellt werden. Ebenso ist eine exakte Kontrolle der nachfolgenden Entwicklungs-, Ätz- und Galvanisiervorgänge notwendig. Bei der nachfolgenden Herstellung von Compact Discs durch Abformen von in bekannter Weise von dem Master gezogenen Matrizen in Spritzgießmaschinen müssen aus dem gleichen Grund die den Verlauf des Schrumpfprozesses des Polycarbonats beeinflussenden Parameter der Massetemperatur, der Nachdruckhöhe und -zeit, der Werkzeugtemperatur, der Einspritzgeschwindigkeit und der Abkühlzeit aufeinander abgestimmt und durch Regelung konstant gehalten werden. Vor allem die Abkühlzeit, deren Dauer maßgeblich die Taktzeit der Spritzgießmaschine und damit die Anzahl der pro Zeiteinheit herstellbaren Compact Discs bestimmt, kann nicht unter einem bestimmten Wert gesenkt werden ohne Gefahr zu laufen, daß die Pittiefe der von einer in diesem Sinne einwandfreien Matrize abgeformten Compact Discs außerhalb der genannten Toleranz liegt.

Der Erfindung liegt die Aufgabe zugrunde, einen plattenförmigen Speicher der gattungsgemäßen Art zu schaffen, der bei voller Kompatibilität mit den nach dem erläuterten Interferenzverfahren ausgelesenen Speichern, insbesondere der Compact Disc, ohne Verschlechterung des MTF-Signals und/oder des PP-Signals mit größeren Toleranzen und daher sowohl preiswerter als auch schneller herstellbar ist.

Diese Aufgabe ist erfindungsgemäß durch die im Patentanspruch 1 angegebenen Merkmale gelöst. Dabei liegt der Erfindung die Erkenntnis zugrunde, daß der erläuterte, bisher als unvermeidbar angesehene Kompromißwert der Pittiefe von 0,225 $\lambda$ (statt von 0,25 $\lambda$), der zwangsläufig die Festlegung der genannten engen Toleranz bedingt, übersieht, daß das PP-Signal nicht notwendigerweise (wie das MTF-Signal) von den pits abgeleitet werden muß, mit der Folge, daß die glatte optische Bezugsfläche zwischen den pits, die 50 % der Gesamtlänge der Spur ausmacht, für die Signalerzeugung ungenutzt bleibt.

Die Erfindung schlägt daher vor, die Erzeugung des MTF-Signals und des PP-Signals voneinander zu entkoppeln. Dies geschieht mittels einer durchgehenden Rille anstelle einer Aufeinanderfolge isolierter pits.

Die Rille ist tiefenmoduliert, enthält nämlich erste Bereiche größerer Tiefe und zweite Bereiche geringerer Tiefe, wobei die ersteren den bisherigen pits und die letzteren den bisherigen land entsprechen.

Diese Gestaltung ermöglicht es nun, die Tiefe der ersten Bereiche genau gleich $\lambda/4$ zu machen, also das optimale MTF-Signal zu erzeugen, mit der Folge, daß der Toleranzbereich dieser Tiefe sich, bezogen auf das in Figur 3a angegebene, numerische Beispiel, auf wenigstens ± 15 nm vergrößert, wobei die untere Toleranzgrenze von 119 nm nichteinmal den bisherigen unteren Toleranzwert von 116,5 nm ausschöpft.

Die Tiefe der zweiten Bereiche der Rille läßt sich so wählen, daß sich ein optimaler Wert für das PP-Signal ergibt, also etwa gleich $\lambda/16$. Der in Figur 3a wiedergegebene Verlauf des PP-Signals in Abhängigkeit von der Pittiefe verdeutlicht, daß auch dieser Tiefenwert wenig kritisch ist. Eine Toleranz dieser (geringeren) Tiefe von ± 50 % kann ohne weiteres hingenommen werden. In dem angegebenen numerischen Beispiel kann also die Tiefe der zweiten Bereiche der Spur bei einem Sollwert von 30 nm zwischen 15 nm und 45 nm schwanken.

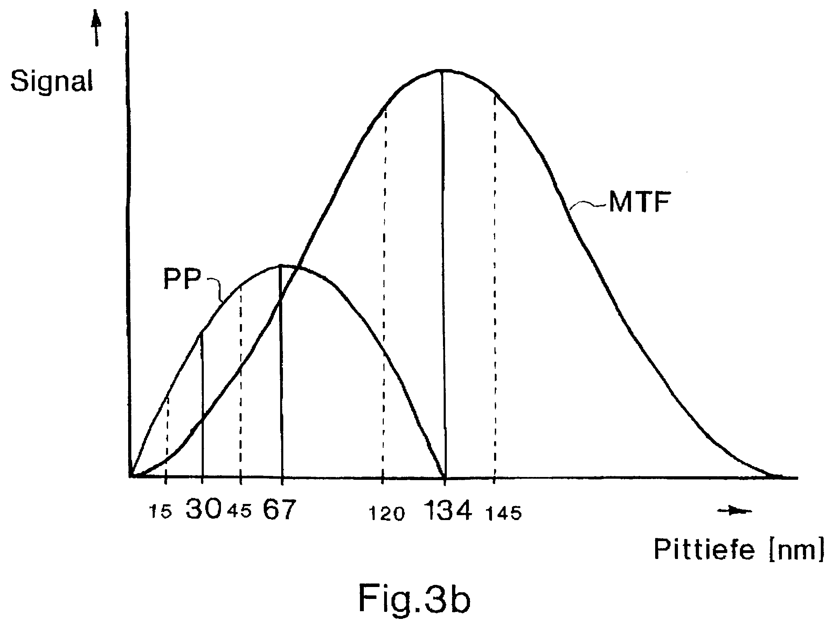

Figur 3b zeigt die vorstehend diskutierten Pittiefenwerte und ihre Toleranzbereiche.

Im Ergebnis wird die Herstellung eines derartigen plattenförmigen Speichers in den genannten Stufen wegen der größeren Toleranzen einfacher und damit preiswerter, infolge der möglichen Verkürzung der Abkühlzeit in der Spritzgießmaschine und deren damit verringerter Taktzeit gleichzeitig auch noch schneller.

Plattenförmige Speicher nach der Erfindung können nicht nur nach dem weitgehend üblichen, optischen Mastering-Prozeß sondern auch nach dem ebenfalls bekannten Verfahren des Direct Metal Mastering hergestellt werden. In diesem Fall hat die Rille innerhalb der Spur nicht U-förmigen sondern V-förmigen Querschnitt mit der Folge, daß die Breite der Rille nicht im wesentlichen konstant sondern längs der zweiten Bereiche geringerer Tiefe kleiner als längs der ersten Bereiche größerer Tiefe ist. Die Tiefe der ersten Bereiche wird im Hinblick auf den V-förmigen Querschnitt so gewählt, daß sich eine mittlere Phasentiefe von $\lambda/4$ ergibt. Der V-förmige Rillenquerschnitt führt dazu, daß auch die ersten Bereiche größerer Tiefe ein PP-Signal von allerdings geringer Amplitude entstehen lassen. Die Tiefe der zweiten Bereiche läßt sich aber auf jeden Fall so wählen, daß zumindest diese Bereiche ein PP-Signal der gewünschten Amplitude erzeugen.

Die Oberflächentopographie eines plattenförmigen Speichers nach der Erfindung ist in den Figuren 4 bis 6 schematisch vereinfacht dargestellt. Es zeigt:

Figur 4    einen perspektivischen Ausschnitt im Bereich zweier benachbarter Spuren einer Matrize zur Herstellung einer Speicherplatte,

Figur 5    einen Schnitt durch eine von einer Matrize nach Figur 4 abgeformte Platte längs der Rille einer Spur und

Figur 6    einen Schnitt durch die gleiche Platte, jedoch rechtwinklig zur Spurrichtung.

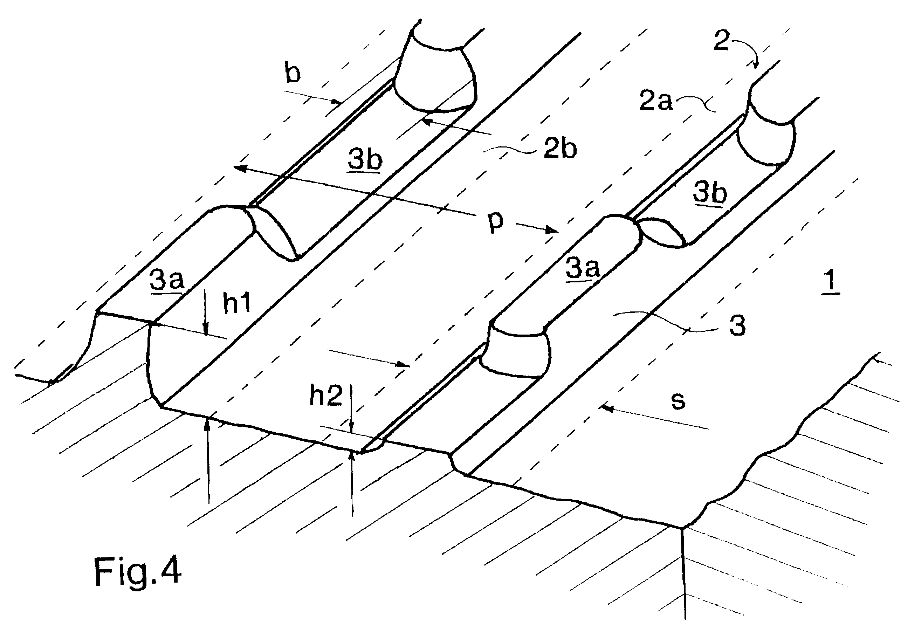

Der in Figur 4 dargestellte Ausschnitt einer Prägematrize ist das Negativ des entsprechenden Bereiches eines von dieser Matrize abgeformten, plattenförmigen Speichers nach der Erfindung. Der Ausschnitt veranschaulicht die Topographie der Oberfläche, auf der die Information in Binärwerten gespeichert ist.

Die plane Oberfläche bildet die glatte optische Bezugsfläche 1, auf der die Informationen längs einer spiraligen Spur 2 der Breite s gespeichert sind. Der dargestellte Ausschnitt zeigt zwei benachbarte Windungen 2a und 2b der Spur 2. Die Windungen 2a und 2b erscheinen in der gewählten Vergrößerung als parallel. Selbstverständlich können die Informationen auch statt in einer einzigen spiraligen Spur in zahlreichen konzentrischen oder auch parallelen Spuren gespeichert sein. Die Bezugszeichen 2a und 2b würden dann statt benachbarter Windungen zwei benachbarte Spuren bezeichnen. Die Spurbreite s ist durch den Durchmesser des Fokusflecks des nichtgezeichneten, fokussierten Leselichtbündels definiert und kann z.B. 1 $\mu$m betragen. Die benachbarten Windungen 2a und 2b (bzw. benachbarte Spuren) haben einen Spurabstand p, der wenigstens das 1,2-fache der Spurbreite s beträgt um eine ausreichend sichere Spurverfolgung und die geforderte hohe Übersprechdämpfung zu erhalten.

Mittig innerhalb der Spur 2 verläuft ein erhabener Damm 3, dessen mittlere Breite b gleich oder kleiner als die Hälfte der Spurbreite s ist. Der Damm hat erste Bereiche 3a größerer Höhe h1 und zweite Bereiche 3b kleinerer Höhe h2 . Die Bereiche 3a und 3b haben zumindest näherungsweise plane Dachflächen und gehen stufenförmig ineinander über. Die Längen der ersten Bereiche 3a und der zweiten Bereiche 3b verkörpern die gespeicherten Binärwerte. Den Dachflächen sowohl der ersten Bereiche 3a als auch der zweiten Bereiche 3b ist jeweils der Binärwert Null zugeordnet, jedem Übergang - sei es von einem Bereich 3a auf einen Bereich 3b, sei es umgekehrt, von einem Bereich 3b auf einen Bereich 3a - ist der Binärwert 1 zugeordnet. Die Längen der Bereiche 3a und 3b sind dementsprechend unabhängig voneinander veränderlich, jedoch ist die kleinste Länge gleich der Rillenbreite b. Der Nennwert der Höhe h1 der ersten Bereiche 3a ist genau gleich $\lambda/4$ der Wellenlänge des Leselichts. Der Nennwert der Höhe h2 der zweiten Bereiche 3b liegt bei $\lambda/16$ dieser Wellenlänge.

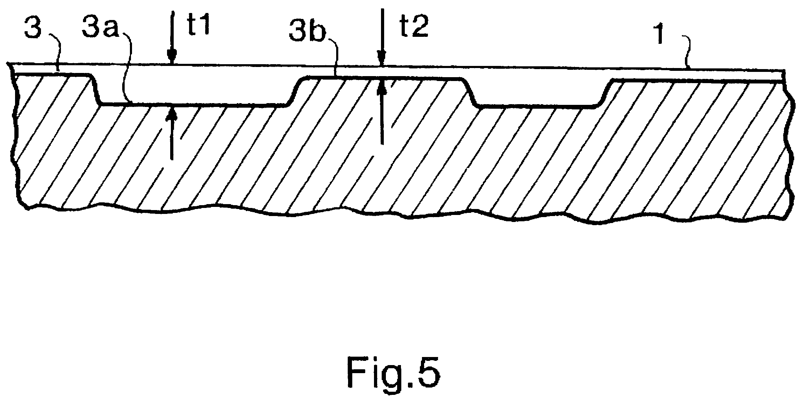

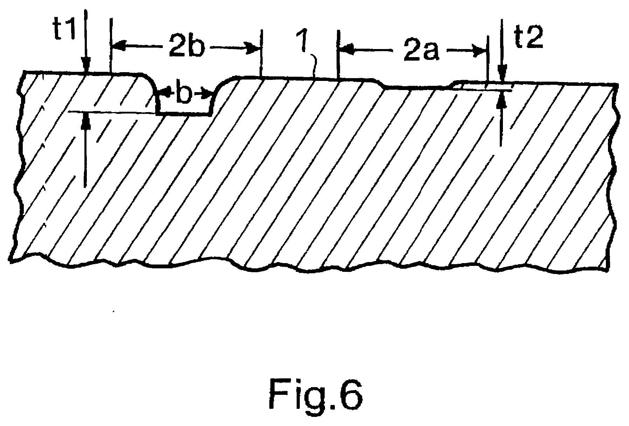

Eine von einer Matrize nach Figur 4 abgeformte Speicherplatte hat die entsprechende komplementäre Oberflächentopographie, deren in Spurrichtung durch die Mitte der Spur gelegter Längsschnitt in Figur 5 und deren zur Spur rechtwinkliger Querschnitt in Figur 6 dargestellt ist. Dem Damm 3 in Figur 4 entspricht daher die durchgehende Rille 3 in Figur 5, die ein entsprechend den gespeicherten Binärwerten veränderliches Tiefenprofil aus ersten Bereichen größerer Tiefe t1 und zweiten Bereichen kleinerer Tiefe t2 hat. Abgesehen von den durch die Abformung bedingten Ungenauigkeiten sind also t1 = h1 und t2 = h2 .

Da sich angesichts der submikroskopischen Größenordnung der Strukturen die theoretisch anzustrebenden scharfkantigen Übergänge nicht erzielen lassen, wird die Breite der Rille 3 zweckmäßig bei der halben Tiefe t1 gemessen. Die vorstehend beschriebene Oberflächenstruktur läßt sich problemlos nach dem bekannten Verfahren des optischen Mastering erzeugen. Die Rillenbreite b ist daher zumindest im wesentlichen konstant. Wird die Oberflächentopographie hingegen nach den ebenfalls bekannten DMM-Verfahren erzeugt, so führt das dreieckige Profil des Präge- oder Schneidstichels zu einem im wesentlichen V-förmigen Querschnitt der Rille mit der Folge, daß zum Auslesen durch Interferenzerzeugung die maximale Tiefe größer als t1 gewählt werden muß. Da sich außerdem zwangsläufig die Breite der Rille längs der zweiten Bereiche kleinerer Tiefe jeweils verringert, ist auch eine Anpassung von t2 auf einen Wert, der ein PP-Signal der gewünschten Amplitude liefert, erforderlich.

**Patentansprüche**

1. Plattenförmiger Speicher für optisch auslesbare, binäre Informationen, gekennzeichnet durch folgende Merkmale:

   1. die Informationen sind seriell in einer spiraligen Spur (2) auf einer glatten optischen Bezugsfläche (1) gespeichert;

   2. die Breite (s) der Spur (2) ist gleich dem Durchmesser des Fokusflecks eines fokussierten Leselichtbündels;

   3. der Abstand (p) benachbarter Windungen (2a, 2b) der Spur (2) beträgt mindestens das 1,2-fache der Spurbreite;

   4. die Spur umfaßt eine durchgehende Rille (3);

   4.1 die Breite (b) der Rille (3) ist gleich oder kleiner als die Hälfte der Spurbreite (s);

   4.2 in der Rille (3) folgen erste Bereiche (3a) größerer Tiefe (t1) und zweite Bereiche (3b) geringerer Tiefe (t2) mit stufenförmigen Übergängen aufeinander;

   4.3 die Längen der ersten Bereiche (3a) und der zweiten Bereiche (3b) sind mindestens gleich der Rillenbreite (b);

   4.4 die Längen der ersten Bereiche (3a) und der zweiten Bereiche (3b) verkörpern die gespeicherten Binärwerte und sind unabhängig voneinander entsprechend diesen Binärwerten veränderlich;

   4.5 die Tiefe (t1) der ersten Bereiche (3a) beträgt 1/4 der Wellenlänge des Leselichts;

   4.6 die Tiefe (t2) der zweiten Bereiche (3b) beträgt etwa 1/16 der Wellenlänge des Leselichts;

   5. die optische Bezugsfläche (1) ist einschließlich aller Windungen der Rille (3) sowie deren erster Bereiche (3a) und deren zweiter Bereiche(3b) mit einem reflektierenden Überzug versehen.

2.  Speicher nach Anspruch 1, dadurch gekennzeichnet, daß die Tiefe (t2) der zweiten Bereiche (3b) der Rille (3) zwischen mindestens 1/32 und höchstens 3/32 der Wellenlänge des Leselichts liegt.

3.  Speicher nach Anspruch 1 oder 2, dadurch gekennzeichnet, daß die Rille (3) einen etwa U-förmigen Querschnitt und eine im wesentlichen konstante Breite (b) hat.

4.  Speicher nach Anspruch 1 oder 2, dadurch gekennzeichnet, daß die Rille einen etwa V-förmigen Querschnitt sowie längs der zweiten Bereiche geringerer Tiefe eine kleinere Breite als längs der ersten Bereiche größerer Tiefe hat.

Fig.1

Fig.2

EP 0 520 251 A2

Fig.3a

EP 0 520 251 A2

Fig.3b

Fig.4

Fig.5

EP 0 520 251 A2

Fig.6